**Europäisches Patentamt**

(19) **European Patent Office**

**Office européen des brevets**

(11) Numéro de publication: **0 006 786**
**B1**

(12) **FASCICULE DE BREVET EUROPEEN**

(45) Date de publication du fascicule du brevet: **17.02.82**

(51) Int. Cl.³: **E 21 B 7/00, A 01 G 17/16 //E04H17/26**

(21) Numéro de dépôt: **79400367.3**

(22) Date de dépôt: **06.06.79**

(54) Dispositif pour forer un trou étagé de réception d'un pieu ou analogue.

(30) Priorité: **13.06.78 FR 7817604**

(43) Date de publication de la demande:
**09.01.80 Bulletin 80/1**

(45) Mention de la délivrance du brevet:
**17.02.82 Bulletin 82/7**

(84) Etats contractants désignés:
**AT BE CH DE GB IT LU NL SE**

(56) Documents cités:
**FR - A - 2 199 778**
**FR - A - 2 249 555**
**FR - A - 2 357 689**
**FR - A - 2 244 907**
**FR - A - 2 260 665**
**US - A - 3 910 556**

(73) Titulaire: **SOCIETE DE GESTION J-L. BIANCONE**
**Société Anonyme Française**
**48, Avenue de L'Arrousaire**
**F-84000 Avignon (FR)**

(72) Inventeur: **Dagnaud, Jacques**
**Montils**
**F-17800 Pons (FR)**

(74) Mandataire: **Mongrédien, André et al,**
**c/o Brevatome 25, rue de Ponthieu**
**F-75008 Paris (FR)**

Courier Press, Leamington Spa, England.

## Dispositif pour forer un trou étagé de réception d'un pieu ou analogue

La présente invention est relative à un dispositif pour forer un trou étagé destiné à recevoir un pieu ou analogue par enfoncement ou battage, ce trou présentant à son extrémité inférieure en profondeur un trou calibré de section égale à celle du pieu, et à son extrémité supérieure, au voisinage de la surface du sol, un élargissement de section, permettant, une fois le pieu engagé dans le trou, en position définitive, de l'immobiliser pour couler autour du pieu une quantité appropriée de ciment ou béton ou autre agent de durcissement analogue, ce dispositif comportant un bâti de support.

On connait de FR—A—2 244 907 un dispositif de forage comprenant un bâti et deux outils de forage concentriques et de diamètres différents permettant de réaliser un trou étagé. Toutefois, ce dispositif est conçu pour le forage des roches dures et présente pour cette raison des outils de forage pleins et fixes l'un par rapport à l'autre, ces outils étant entraînés en rotation lors du forage.

L'invention s'applique plus particulièrement au forage de trous destinés à recevoir des pieux servant à tendre, de place en place, un fil métallique horizontal, sur lequel sont fixés, par des liens adaptés, les sarments d'un alignement de vigne. Elle s'applique également à d'autres usages, notamment pour la réalisation de clôtures ou analogues, nécessitant en règle générale, un nombre élevé de pieux successifs, en permettant le forage et l'alignement rapides des trous correspondants de façon sûre, régulière et uniforme, avec au total un prix de revient très sensiblement inférieur à celui obtenu avec des méthodes de forage classiques.

A cet effet, le dispositif considéré se caractérise selon l'invention en ce que le bâti de support porte un manchon de forme générale cylindrique, apte à être déplacé par rapport au bâti pour appliquer une collerette d'appui inférieure contre la surface du sol entourant la zone du trou à forer, un mandrin de forage axial, plein et vertical, fixé à l'extrémité de la tige du piston d'un premier vérin monté sur le bâti support, une douille creuse coaxiale au mandrin et présentant une hauteur réduite par rapport à la longueur de celui-ci, cette douille comprenant à son extrémité supérieure un bord rentrant prévu pour coopérer avec un épaulement porté par le mandrin axial en un point de sa longueur tel que cet épaulement entraîne la douille seulement à la fin de la course du mandrin sous l'effet de premier vérin, cette douille pénétrant alors dans le sol avec le mandrin pour former, à l'extrémité supérieure de trou, un évidement entourant celui-ci et des moyens, portés par le manchon, pour réaliser, après retrait simultané du mandrin et de la douille, l'extraction de la partie de sol emprisonnée entre la douille et le mandrin.

Selon une caractéristique particulière du dispositif considéré, le manchon est porté par le bâti support au moyen de colonnes de guidage montées coulissantes dans le bâti, chaque colonne formant le cylindre des seconds vérins, de manière à assurer respectivement l'appui du manchon contre le sol ou son relevage après achèvement du forage du trou.

Selon une autre caractéristique également, le bâti support est porté part le châssis d'un engin de transport, du genre tracteur agricole ou analogue, permettant son déplacement pour les forages successifs de trous espacés, ce bâti étant articulé sur le châssis autour d'un axe transversal autorisant son relèvement lorsque le dispositif n'est pas en position d'utilisation.

Dans un mode de réalisation préféré du dispositif selon l'invention, les moyens d'extraction sont constitués par une plaque transversale, s'étendant à l'intérieur de la douille, entre celle-ci et le mandrin, cette plaque étant liée au manchon d'appui par une liaison rigide de sorte que l'extraction de la partie de sol entre douille et mandrin se produise à la suite d'un déplacement relatif de cette douille par rapport au manchon.

Selon une autre caractéristique enfin, le premier vérin actionnant le mandrin est monté pivotant dans le bâti support et comporte à son extrémité supérieure, un levier permettant son orientation par rapport à l'axe du trou, en particulier lorsque la section du mandrin n'est pas cylindrique, par exemple carrée ou autre.

D'autres caractéristiques d'un dispositif pour forer un trou étagé, établi conformément à l'invention, apparaîtront encore à travers la description qui suit d'un exemple de réalisation, donné à titre indicatif et non limitatif, en référence aux dessins annexés sur lesquels:

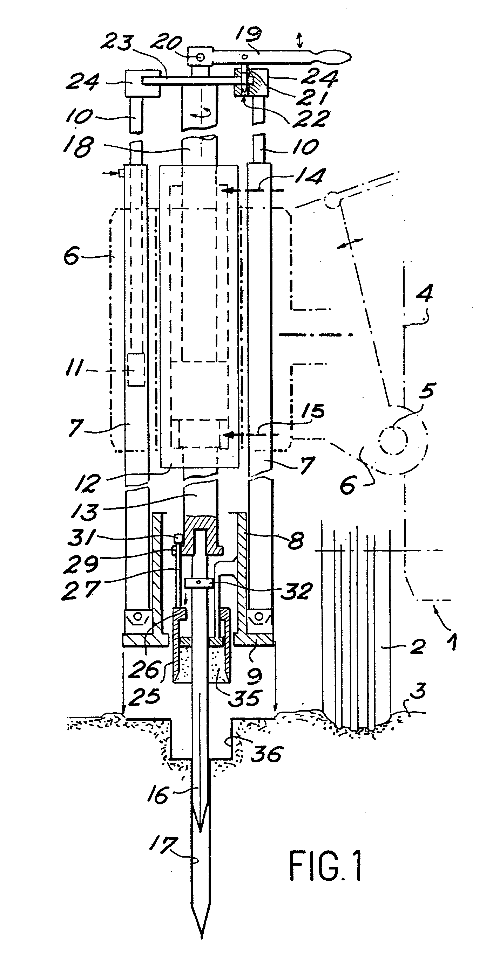

— la figure 1 est une vue schématique en coupe verticale du dispositif considéré,

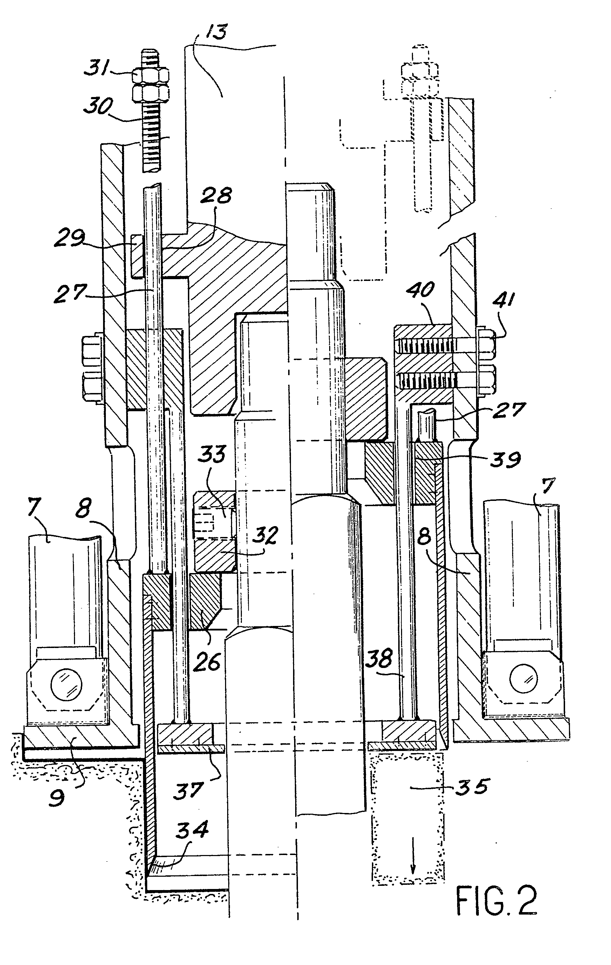

— la figure 2 est une vue en coupe également mais à plus grande échelle, faisant plus explicitement ressortir différents détails de réalisation du dispositif.

Comme on le voit sur ces figures, la référence 1 désigne schématiquement un engin de transport, du genre d'un tracteur agricole, dont une des roues 2 du train avant est seule représentée, cette dernière étant en appui contre la surface 3 du sol. Sur le châssis 4 de ce tracteur est prévu un axe transversal 5, sur lequel est articulé un bâti support 6 pour le dispositif de forage selon l'invention, ce bâti étant ainsi porté par le châssis tout en pouvant pivoter pour permettre son relèvement lorsque'il n'est pas en service. En revanche dans la position représentée sur les figures, le bâti 6 est basculé de sorte qu'il puisse réaliser le forage dans le sol 3 de trous étagés 17, 36, comportant au voisinage du sol un élargissement de section, apte à autoriser, une fois chaque trou occupé par un pieu, la coulée d'une couche de béton ou autre pour réaliser aisément l'immobilisation de ce pieu.

Sur le bâti support 6 sont montées coulissantes, deux colonnes creuses et parallèles 7, supportant à leurs extrémités inférieures un manchon 8, présentant une collerette plane transversale 9, prévue pour venir en appui contre la surface du sol 3 en entourant la zone où doit être réalisé le forage d'un trou. Le déplacement des colonnes 7 et par suite l'abaissement ou le relèvement du manchon 8 qui leur est lié, par rapport au bâti 6, s'effectue au moyen d'un vérin pneumatique ou par un mécanisme équivalent, commandé à partir du tracteur 1, comportant dans l'example considéré, deux tiges rigides et fixes 10 engagées à l'intérieur des colonnes 7 et munies à leurs extrémités inférieures de pistons 11.

Entre les colonnes 7, le bâti support 6 supporte également un autre vérin 12, dont le piston 13 peut être déplacé dans le sens de la montée ou de la descente par rapport au bâti grâce à des arrivées de fluide sous pression, respectivement 14 et 15. Ce piston 13 est solidarisé d'un mandrin axial 16, permettant sous l'effet de la commande du vérin de réaliser dans le sol 3, le trou 17 à forer. A son extrémité supérieure, le vérin 12 est prolongé par une tige 18 terminée par un levier d'actionnement 19 articulé en 20 sur cette tige, ce levier 19 supportant lui-même une broche 21 d'immobilisation en rotation normalement engagée dans un trou 22 d'une plaque transversale 23 portée par des taquets 24 fixés à l'extrémité supérieure des tiges 10. Ce levier 19, une fois la broche 21 dégagée de son trou 22 permet notamment de faire pivoter la tige 18 et par suite le vérin 12 et le mandrin axial 16, en réalisant l'orientation souhaitée de ce dernier par rapport à l'axe de trou 17. Avantageusement, la plaque 23 comporte une pluralité de trous 22 répartis selon sa périphérie, de manière à défini, pour chacun d'eux, une position d'immobilisation déterminée de levier 19.

Conformément à l'invention, le mandrin 16 est associé à une douille coaxiale 25, entourant ce manchon et présentant une hauteur notablement inférieure à la longueur totale du mandrin. Cette douille 25 comporte à son extrémité supérieure un bord rentrant 26 et des tiges de guidage 27, s'étendant verticalement à partir de ce bord 26, ces tiges après traversée d'un alésage 28 prévu dans un épaulement 29 du piston d'actionnement 13, présentant en bout une partie filetée 30 sur laquelle sont vissés des écrous de butée 31. Grâce à ces dispositions, en position relevée du dispositif, les écrous 31 viennent en appui contre l'épaulement 29 et arrêtent le mouvement vers le bas de la douille sous l'effet de son propre poids, cette douille restant ainsi suspendue sous le piston 13. En variante, le vérin 12 et son piston 13 peuvent être remplacés par un marteau pneumatique pour agir par battage.

Sur le mandrin 16 est par ailleurs montée une bague cylindrique 32, immobilisée par des vis 33 permettant d'adjuster sa position en hauteur, cette bague formant épaulement d'appui pour le mandrin contre le bord rentrant 26 de la douille 25. De ce fail, en fin du mouvement d'abissement du mandrin 16 réalisant le forage de trou 17, se produit le mise en butée de la bague 32 contre le bord rentrant 26 de la douille 25. De ce fait, en fin du collerette 25 qui pénètre à son tour dans le sol en découpant autour du trou 17 une partie de sol 35, celle-ci ménageant une fois le retrait de la douille et du mandrin effectué, un évidement libre 36 à l'extrémité supérieure de trou.

Grâce à ces dispositions, une fois le mandrin 16 et la douille 25 retirés, le trou 17 peut aisément recevoir un pieu, poteau ou analogue (non représenté), convenablement enfoncé dans le sol mais dont la partie supérieure émerge sur une hauteur appropriée, l'immobilisation de ce pieu étant alors réalisée, dans l'évidement 36, par une quantité juste suffisante de béton ou de ciment.

Le relèvement du mandrin 16 de la douille 25 étant réalisé, le dispositif assure automatiquement l'extraction de la partie de sol 35 entraînée entre cette douille et ce mandrin. Dans ce but et conformément à une caractéristique particulière de l'invention, l'appareil comporte à l'intérieur de la douille 25, une plaque transversale 37 fixée en bout de tiges verticales 38, assurant une liaison rigide de cette plaque 37 et le manchon d'appui 8, ces tiges 38 après traversée d'un alésage 39 prévu dans le bord rentrant 26 permettant leur coulissement relatif, présentant chacune une tête 40 immobilisée vis-à-vis de la surface interne du manchon 8 par des vis 41.

Le fonctionnement du dispositif selon l'invention se déduit dès lors aisément de la description qui précède: après avoir positionné le tracteur 1 portant le dispositif au-dessus de la zone où doit être réalisé un trou 17, on abaisse, dans un premier temps, le manchon 8 de telle sorte que sa collerette 9 prenne appui sur le sol 3 autour de la région à forer. Dans un deuxième temps, on agit sur le vérin 12 de telle sorte que le déplacement du piston 13 de ce dernier entraîne le mandrin 16 et réalise le trou axial 17. Quelque temps avant la fin de la course, la bague 32 fixée sur le mandrin 16 entraîne à son tour la douille 25, qui réalise autour du trou 17 l'évidement 36. Une fois les pièces en butée inférieure, on relève l'ensemble de telle façon que la partie de sol 35 entre la douille 25 et le mandrin 16, soit évacuée. Dans un premier temps, on extrait cette partie 35, en provoquant le déplacement relatif de la plaque d'appui 37 et de la douille 25 grâce â un mouvement différentiel des deux vérins portés par le bâti support 6.

On réalise ainsi un dispositif de forage particulièrement simple et robuste, bien adapté aux applications plus spécialement visées, notamment à la mise en place de pieux ou poteaux pour alignements de vignes ou clôtures, l'opération de forage s'effectuant à cadence rapide, avec un coût de production minimal et une mise en verticalité et alignement parfaits.

## Revendications

1. Dispositif pour forer un trou étagé (17,36) destiné à recevoir un pieu ou analogue par enfoncement ou battage, ce trou présentant à son extrémité inférieure en profondeur un trou (17), calibré de section égale à celle du pieu et à son extrémité supérieure, au voisinage de la surface du sol un élargissement de section (36) permettant une fois le pieu engagé dans le trou, en position définitive, de l'immobiliser pour couler autour du pieu une quantité appropriée d'agent de durcissement, ce dispositif comportant un bâti de support (6), caractérisé en ce que le bâti de support (6) porte un manchon (8) de forme générale cylindrique, apte à être déplacé par rapport au bâti (6) pour appliquer une collerette d'appui (9) inférieure contre la surface du sol entourant la zone du trou (17) à forer, un mandrin (16) de forage axial, plein et vertical, fixé à l'extrémité de la tige du piston (13) d'un premier vérin (12) monté sur le bâti supporté (6), une douille creuse (25) coaxiale au mandrin (16) et présentant une hauteur réduite par rapport à la longueur de celui-ci, cette douille (25) comprenant à son extrémité supérieure un bord (26) rentrant prévu pour coopérer avec un épaulement (32) porté part le mandrin (16) axial en un point de sa longueur tel que cet épaulement (32) entraîne la douille (25) seulement à la fin de la course du mandrin (16) sous l'effet du premier vérin (12), cette douille (25) pénétrant alors dans le sol avec le mandrin (16) pour former, à l'extrémité supérieure du trou (17), un évidement (36) entourant celui-ci et des moyens, portés par le manchon (8) pour réaliser, après retrait simultané du mandrin (16) et de la douille (25), l'extraction de la partie de sol emprisonnée entre la douille (25) et le mandrin (16).

2. Dispositif selon la revendication 1, caractérisé en ce que le manchon (8) est porté par le bâti support (6) au moyen de colonnes de guidage (7) montées coulissantes dans le bâti (6), chaque colonne (7) formant le cylindre des seconds vérins (7,10,11), de manière à assurer respectivement l'appui du manchon (8) contre le sol ou son relevage après achèvement du forage du trou (17).

3. Dispositif selon la revendication 1, caractérisé en ce que le bâti support (6) est porté par le châssis (4) d'un engin de transport (1), du genre tracteur agricole ou analogue, permettant son déplacement pour des forages successifs de trous espacés, ce bâti (6) étant articulé sur le châssis (4) autour d'un axe transversal autorisant son relèvement et son orientation.

4. Dispositif selon l'une quelconque des revendications 1 à 3, caractérisé en ce que les moyens d'extraction sont constitués par une plaque transversale (37), s'étendant à l'intérieur de la douille (25), entre celle-ci et le mandrin (16), cette plaque (37) étant liée au manchon d'appui (8) par une liaison rigide de sorte que l'extraction de la partie de sol entre douille et mandrin (16) se produise à la suite d'un déplacement relatif de cette douille par rapport au manchon.

5. Dispositif selon l'une quelconque des revendications 1 à 4, caractérisé en ce que le premier vérin (12) actionnant le mandrin (16) est monté pivotant dans le bâti support (6) et comporte à son extrémité supérieure un levier (19) permettant son orientation part rapport à l'axe du trou.

6. Dispositif selon l'une quelconque des revendications 1 à 5, caractérisé en ce que l'on peut actionner le mandrin (16) par marteau pneumatique ou hydraulique qui remplace le vérin (12).

## Claims

1. Device for drilling a stepped hole (17,36) intended for receiving a pile or the like by driving or ramming, this hole possessing, at its deeper end, a calibrated hole (17), the cross-section of which is equal to that of the pile, and at its top end, in the region of the surface of the ground, an enlargement of cross-section (36) which makes it possible, once the pile is engaged in the hole, in the final position, to immobilise it for pouring an appropriate amount of hardener around the pile, this device comprising a supporting frame (6), characterised in that the supporting frame (6) carries a coupling (8) of cylindrical general shape, which is capable of being displaced relative to the frame (6) for applying a lower bearing flange (9) against the surface of the ground whilst surrounding the zone of the hole (17) to be drilled, a solid and vertical, axial drilling mandrel (16) fixed to the end of the rod of the piston (13) of a first jack (12) mounted on the supporting frame (6), a hollow sleeve (25) which is coaxial with the mandrel (16) and has a reduced height relative to the length of the latter, this sleeve (25) comprising, at its top end, a reentrant rim (26) provided for interacting with a shoulder (32) carried by the axial mandrel (16) at a point along its length such that this shoulder (32) only carries the sleeve (25) along at the end of the stroke of the mandrel (16), under the effect of the first jack (12), and this sleeve (25) then penetrating into the ground together with the mandrel (16) to form, at the top end of the hole (17), a recess (36) surrounding the latter, and means, carried by the coupling (8), for effecting, after simultaneous retraction of the mandrel (16) and the sleeve (25), the extraction of that part of the ground which is trapped between the sleeve (25) and the mandrel (16).

2. Device according to Claim 1, characterised in that the coupling (8) is carried by the supporting frame (6) by means of guide columns (7) mounted to slide in the frame (6), each column (7) forming the cylinder of the second jacks (7,10,11), so as to ensure, respectively, the bearing of the coupling (8) against the ground or its raising after the drilling of the hole (17) is complete.

3. Device according to Claim 1, characterised in that the supporting frame (6) is carried by the chassis (4) of a transporting device (1) of the type consisting of an agricultural tractor or the like, permitting its displacement for successive drillings of holes which are spaced out, this frame (6) being articulated on the chassis (4) around a transverse axle permitting the raising and orientation thereof.

4. Device according to any one of Claims 1 to 3, characterised in that the extraction means consist of a transverse plate (37) extending inside the sleeve (25), between the latter and the mandrel (16), this plate (37) being joined to the bearing coupling (8) by a rigid connection so that the extraction of that part of the ground which is between the sleeve and the mandrel (16) takes place following a relative displacement of this sleeve relative to the coupling.

5. Device according to any one of Claims 1 to 4, characterised in that the first jack (12), actuating the mandrel (16), is mounted to pivot in the supporting frame (6) and comprises, at its top end, a lever (19) permitting its orientation relative to the axis of the hole.

6. Device according to any one of Claims 1 to 5, characterised in that the mandrel (16) can be actuated by a pneumatic or hydraulic hammer, which replaces the jack (12).

**Patentansprüche**

1. Vorrichtung zum Bohren eines abgestuften Loches (17,36), welches zur Aufnahme eines Pfosten oder ähnlichem durch Eintreiben oder Einschlagen bestimmt ist, wobei dieses Loch an seinem unteren Ende in der Tiefe ein Loch (17), welches mit dem gleichen Querschnitt wie demjenigen des Pfostens ausgelegt ist, und an seinem oberen Ende nahe der Oberfläche des Bodens eine Vergrößerung des Querschnittes (36) aufweist, die, wenn einmal der Pfosten in das Loch eingebracht ist, erlaubt, diesen in seiner endgültigen Lage festzulegen, indem um den Pfosten eine geeignete Menge eines Härtungsmittels gegossen wird, und wobei diese Vorrichtung einen Tragrahmen (6) aufweist, dadurch gekennzeichnet, daß der Tragrahmen (6) eine Muffe (8) allgemein zylindrischer Form trägt, welche in besug auf den Tragrahmen (6) verschiebbar ist, un einen unteren Stützbund (9) auf die Oberfläche des Bodens aufzubringen, der den Bereich des zu bohrenden Loches (17) umgibt sowie einen axialen, vollen und vertikalen Dorn (16) zum Bohren, der am Ende der Kolbenstange (13) einer ersten, an dem Tragrahmen (6) befestigten Kolben-Zylinderanordnung (12) befestigt ist, eine hohle Hülse (25), die koaxial zu dem Dorn (16) ist und in bezug auf die Länge des Dornes (16) eine geringere Höhe aufweist, wobei diese Hülse (25) an ihrem oberen Ende einen eingezogenen Rand (26) aufweist, der zum Zusammenarbeiten mit einer Schulteranordnung (32) vorgesehen ist, welche von dem Dorn (16) axial an einem Punkt bezüglich seiner Länge derart getragen wird, daß diese Schulteranordnung (32) die Hülse (25) lediglich am Ende der Bewegung des Dornes (16) aufgrund der Wirkung der ersten Kolben-Zylinderanordnung (12) mitnimmt, wobei diese Hülse (25) dann in den Boden mit dem Dorn (16) endringt, um am oberen Ende des Loches (17) eine dieses umgebende Ausnehmung (36) zu bilden, und Mittel, die von der Muffe (8) getragen werden, die nach dem gleichzeitigen Zurüchziehen des Dornes (16) und der Hülse (25) das Herausnehmen des Teils des Bodens ermöglichen, der zwischen der Hülse (25) und dem Dorn (16) eingesperrt ist.

2. Vorrichtung nach Anspruch 1, dadurch gekennzeichnet, daß die Muffe (8) von dem Tragrahmen (6) durch Führungssäulen (7) getragen wird, welche verschieblich in dem Tragrahmen (6) befestigt sind, wobei jede Säule (7) den Zylinder von zweiten Kolben-Zylinderanordnungen (7,10,11) derart bildet, daß das Abstützen der Muffe (8) an dem Boden bzw. ihr Anheben nach Vollendung des bohrenden Loches (17) sichergestellt ist.

3. Vorrichtung nach Anspruch 1, dadurch gekennzeichnet, daß der Tragrahmen (6) von dem Chassis (4) eines Transportfahrzeuges (1) von der Art eines Traktors für die Landwirtschaft oder ähnlichem getragen ist, was eine Bewegung für aufeinanderfolgende Bohrungen beabstandeter Löcher ermöglicht, und daß der Tragrahmen (6) an dem Chassis (4) um eine Querachse verschwenkbar ist, was dessen Anheben und dessen Orientierung erlaubt.

4. Vorrichtung nach einem der Ansprüche 1 bis 3, dadurch gekennzeichnet, daß die Mittel zum Herausnehmen von einer quer verlaufenden Platte (37) gebildet sind, welche sich im Inneren der Hülse (25) zwischen dieser und dem Dorn (16) erstreckt, und daß diese Platte (37) an der Muffe (8) zum Abstützen mit einer starren Verbindung derart verbunden ist, daß das Herausnehmen des Teils des Bodens zwischen der Hülse und dem Dorn (16) anschließend an eine Bewegung dieser Hülse relative zu der Muffe erfolgt.

5. Vorrichtung nach einem der Ansprüche 1 bis 4, dadurch gekennzeichnet, daß die erste Kolben-Zylinderanordnung (12), die den Dorn (16) betätigt, verschwenkbar in dem Tragrahmen (6) befestigt ist und an ihrem oberen Ende einer Hebel (19) aufweist, der ihre Ausrichtung in bezug auf die Achse des Loches ermöglicht.

6. Vorrichtung nach einem der Ansprüche 1

9     **0 006 786**     10

bis 5, dadurch gekennzeichnet, daß man den Dorn (16) durch einen von Druckluft oder hydraulisch betriebenen Hammer betätigen kann, welches die Kolben-Zylinderanordnung (12) ersetzt.

FIG.1

FIG.2